# EUROPEAN PATENT APPLICATION

(11) **EP 4 706 850 A1**
(43) Date of publication of application: **11.03.2026**
(21) Application number: 24382969.4
(22) Date of filing: 10.09.2024
(51) Int. Cl.: B22F 12/20, B23K 26/144, B23K 26/14, B33Y 30/00, B23K 26/342, B23K 26/70

(54) **LIQUID-COOLING DEVICE FOR LASER HEAD NOZZLES**

(71) Applicant: Talens Systems SLU, 20870 Guipúzcoa (ES)
(72) Inventor: GABILONDO, Jose Juan, 20870 ELGOIBAR - Guipúzcoa (ES); ALVAREZ, Piera, 20870 ELGOIBAR - Guipúzcoa (ES)
(74) Representative: Balder IP Law, S.L.

(57) **Abstract**

The invention refers to a liquid-cooling device (1) for laser head nozzles, wherein the device comprises: a body (18) having a central opening (6) configured for accommodating a nozzle (7) of a laser head, and a channel (5) formed internally in the tubular body (18) and extending at least in part around the central opening (6), and an input port (9) and an output port (10), both, fluidly communicated with the channel (5) for circulating a cooling liquid through the perimetral channel (5). The invention also refers to a laser head nozzle assembly (15) comprising the liquid-cooling device (1) and a nozzle (7) of a laser head accommodated in the central opening (6) of the tubular body (18), such that the nozzle (7) and the liquid-cooling device (1) are thermally coupled, in order to reduce temperature of the nozzle (7) when a cooling liquid is circulated through the channel (5) of the liquid-cooling device (1).

## Description

### TECHNICAL FIELD

The present invention refers to a laser equipment, preferably to laser cladding equipment.

An object of the invention is the provision of a liquid-cooling device for refrigerating laser head nozzles, which efficiently cool down the nozzle without interfering with the laser cladding process, and which simplifies maintenance of the nozzle.

### STATE OF THE ART

Laser metal deposition is an additive manufacturing technology in which metal objects are built up on a substrate. A particular case of additive manufacturing is laser cladding, wherein metal layers are applied to existing components, for strengthening, modifying or repairing a surface of a metal component.

During a laser metal deposition process, metal powder is projected through a nozzle coupled to a laser head using a carrier gas, and a laser beam melts the metal powder to generate a melt pool on an existing surface. The melted powder bonds with the base material in the melt pool, thereby forming additively new layers or objects.

The nozzle of the laser head, due to the friction of the metal powder, reaches high temperatures, so it needs to be refrigerated.

It is known to use a cooling circuit inside the nozzle of the laser head, such that a cooling liquid, typically water, passes through the nozzle, using O-rings for sealing, which do not always fit well and the water mixes with the metal powder and leaks, thus, stopping the generation water supply. Additionally, for maintenance these known cooling systems, water supply must be cut off, water pipes removed, all parts disassembled, O-rings checked, and metal powder conduits cleaned and dried thoroughly and then reassembling all the previously mentioned components.

### DESCRIPTION OF THE INVENTION

An aspect of the invention refers to a liquid-cooling device for laser head nozzles, wherein the device comprises: a body having a central opening configured for accommodating a nozzle (or a part thereof) of a laser head in the central opening, and a channel formed internally in the body and extending at least in part around the central opening.

Furthermore, the device has an input port and an output port, both, fluidly communicated with the channel for circulating a cooling liquid through the channel.

In a preferred embodiment of the invention, the body is a tubular body, and the channel is a perimetral channel which extends all around the tubular body.

Preferably, the central opening has a cylindrical shape, and the perimetral channel has an annular configuration, and the input port and the output port are diametrically arranged with respect to the perimetral channel.

The input and output ports are placed above the perimetral channel, and each of the input and output port has a passage which extend in a direction parallel to the axis of the central opening.

In a preferred embodiment of the invention, the device is composed of an upper part and a bottom part assembled or joined together, for example the two parts may be welded. The bottom part has an inner wall and an outer wall, such that the perimetral channel is defined in between the inner and outer walls. The input port and the output port are formed in the upper part.

The upper part is configured to close the space in between the inner and outer walls when the upper and bottom parts are assembled or joined together, so that the perimetral channel is formed for conducting a cooling fluid.

In an alternative embodiment of the invention, the body is a semi tubular body which extends only on a part of a nozzle or a part of a nozzle of a laser head, when the body and the nozzle are coupled together. The term semi tubular body should be understood as a longitudinal half of a tube, or a tube with a longitudinally cut-out section. This embodiment facilitates the process of coupling and uncoupling the nozzle and the liquid-cooling device.

Another aspect of the invention refers to a laser head nozzle assembly comprising the liquid-cooling device previously described, and a nozzle of a laser head accommodated in the central opening of the body, such that the nozzle and the liquid-cooling device are thermally coupled, in order to reduce temperature of the nozzle when a cooling liquid is circulated through the channel of the liquid-cooling device.

Another aspect of the invention refers to a laser cladding equipment including the laser head nozzle assembly previously described, and a cooling liquid circuit provided with a liquid pump and with temperature reduction means for reducing temperature of a cooling liquid inside the circuit. The cooling liquid circuit is fluidly coupled to the inner port and to the outer port of the liquid-cooling device, such that the temperature reduction means are located upstream the input port and downstream the outport port.

The laser cladding equipment is fitted with a powdered material circuit for feeding powdered material to the nozzle. The powdered material circuit and the cooling liquid circuit are isolated from each other, such that the powdered material and the cooling liquid can circulate independently, so they cannot be mixed.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows in Figure A a perspective view of the cooling device of the invention in a disassembled state, and in Figure B the same representation than Figure 1A but in a cross-sectional view.
Figure 2.-shows two perspective views of the device in an assembled state.
Figure 3.- shows a front elevational cross-sectional view. The arrows in the figure indicate the cooling liquid circulation.
Figure 4.- shows a perspective view of a laser head nozzle assembly according to the invention.
Figure 5.- shows an exploded view of the laser head nozzle assembly of the previous figure, with the cooling device represented in a cross-sectional view.
Figure 6.- shows a front elevational cross-sectional view of the laser head nozzle assembly, in an assembled state.
Figure 7.- shows an alternative embodiment of the invention in which the cooling device surrounds only a part of a laser head nozzle. Figure 7A is a perspective view of a cooling device coupled to a laser head nozzle, and Figure 7B is an exploded view of the cooling device.

### PREFERRED EMBODIMENTS OF THE INVENTION

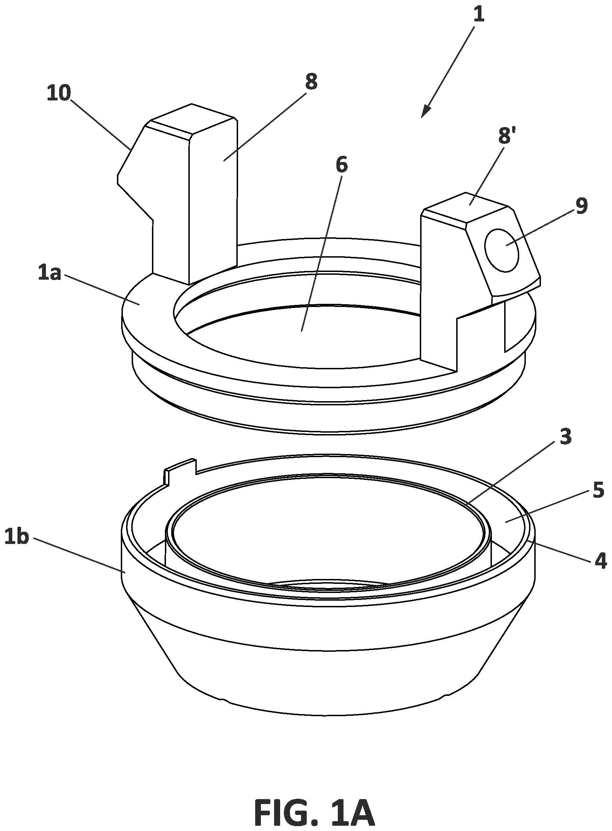

**Figure 1A** shows a preferred example of a liquid-cooling device (1) according to the invention, which is formed by an upper part (1a) and a bottom part (1b) which in practise are assembled or joined together, for example by welding or by having the two parts assembled by a threaded coupling.

The bottom part (1b) has an inner wall (3) and an outer wall (4) such that a perimetral channel (5) is defined in between the inner and outer walls (3,4). The upper part (1a) is configured to close the space in between the inner and outer walls (3, 4) when the upper and bottom parts (1a, 1b) are assembled or joined together, and thereby configuring the perimetral channel (5) as a closed conduit for the circulation of a cooling liquid.

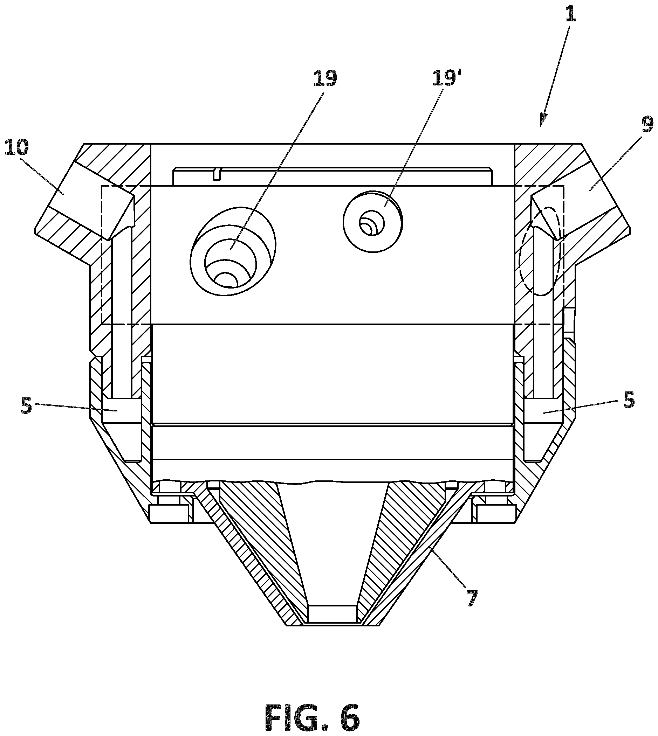

The cooling device (1) is configured as a tubular body having a central opening (6) of cylindrical configuration, adapted for accommodating a nozzle (7) of a laser head, as shown for example in **Figure 6****.** The perimetral channel (5) has an annular configuration and it extends around the central opening (6), that is, all around the nozzle (7).

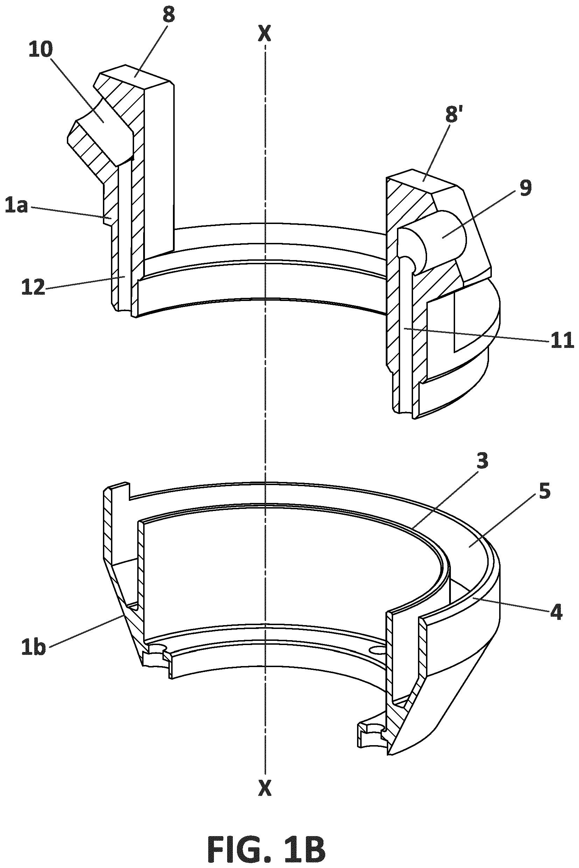

The upper part (1a) has two extensions (8, 8') that project upwardly from the upper part (1a), such that an input port (9) is formed internally in one of the extensions (8') and an output port (10) is formed in the other extension (8), as better shown in **Figure 1B****.** Both, the input and output ports (9, 10) are fluidly communicated with the perimetral channel (5) for circulating a cooling liquid throughout the perimetral channel.

The input and output ports (9, 10) are placed above the perimetral channel (5), and each of the input and output port (9, 10) has a passage (11, 12) which extend in a direction parallel to the axis (X) of the central opening (6), and which communicate with the channel (5).

The input port (9) and the output port (10) are diametrically arranged with respect to the perimetral channel (5), so that a flow of cooling liquid entering the channel (5), would circulate through the channel (5) and exist the channel through the output port (10).

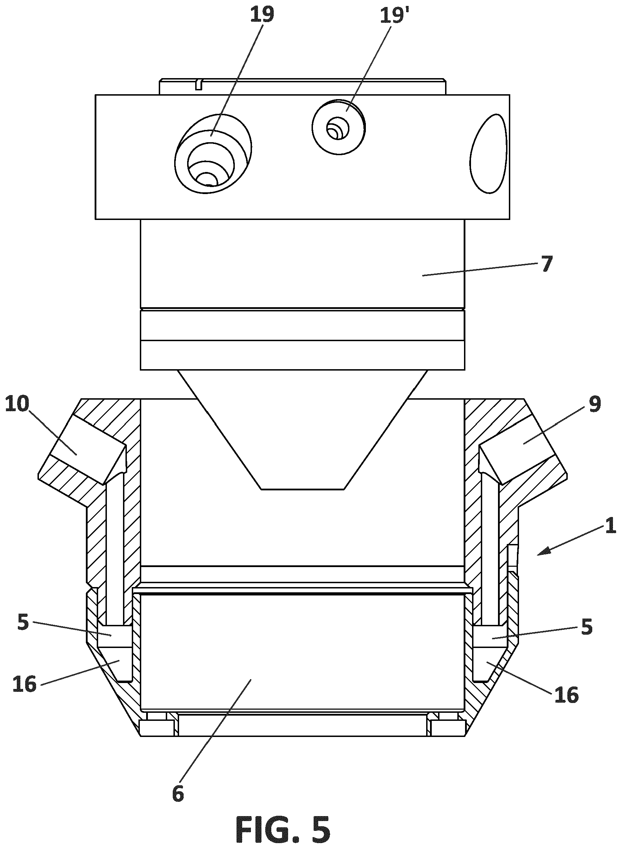

As shown in **Figure 5****,** the perimetral channel (5) has a constant inner diameter (13), while the outer diameter (14) is also constant in an upper section of the perimetral channel (5), but the outer diameter (14) progressively decreases in a lower section (16) of the same, so that this lower section (16) has a tronco-conical configuration.

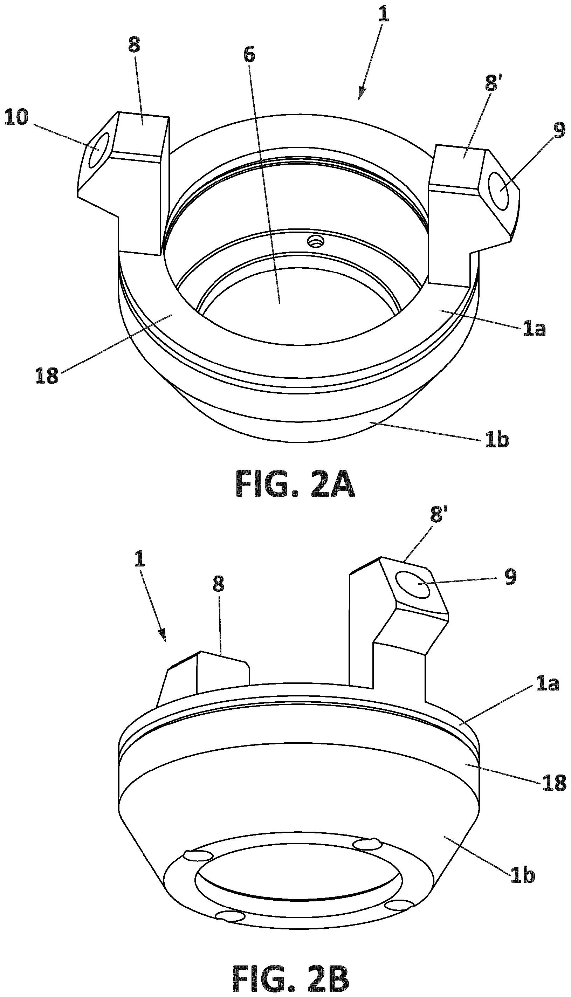

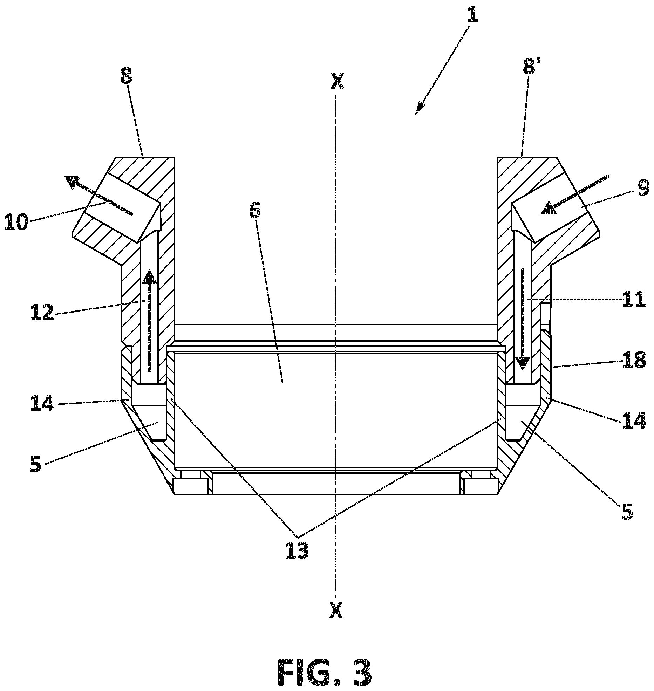

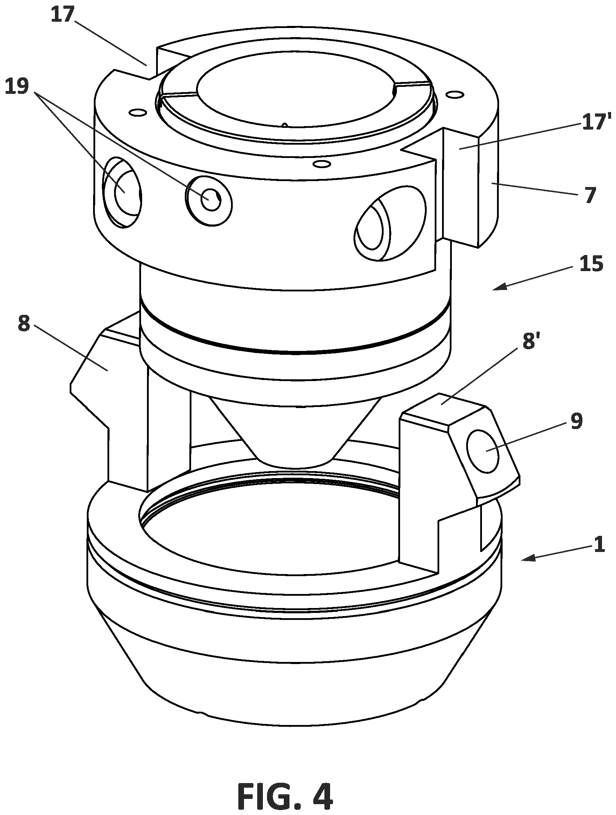

**Figure 4** shows a laser head nozzle assembly (15) formed by the liquid-cooling device (1) of the previous figures, and a nozzle (7) of a laser head meant to be accommodated in the central opening (6) of the tubular body (18) of the device (1) as shown in **Figures 2** and **3****,** such that the nozzle and the liquid-cooling device are thermally coupled, in order to reduce temperature of the nozzle when a cooling liquid is circulated through the perimetral channel (5) of the liquid-cooling device (1).

The nozzle (7) has two cut-outs (17, 17') complementary to the extensions (8, 8'), so that the extensions (8, 8') are inserted in the cut-outs (17, 17'), when the cooling device (1) and the nozzle (7) are coupled together.

As represented in **Figures 5** and **6****,** the nozzle (7) has several ports, a first port (19) for injecting metal powder and a second port (19') for injecting shielding gas into the nozzle (7). As it can be deduced from the figures, the cooling liquid circuit and the metal powder circuit, are independent so that powdered material and the cooling liquid cannot be mixed.

Additionally, service of the laser head nozzle assembly (15) is quite simple for example for maintenance purposes, because it only requires uncoupling the cooling device (1) from the nozzle (7) without the need of interrupting the cooling liquid supply, and without interfering with the flow of metal powder circulating internally in the nozzle (7).

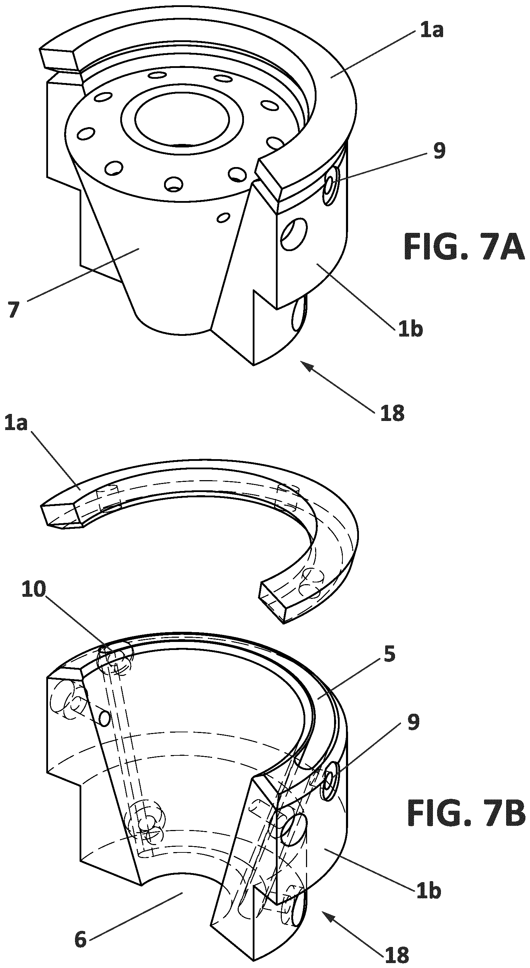

In the alternative embodiment of **Figures 7A, 7B****,** the body (18) is a semi tubular body which extends only on a part of a nozzle (7), when the body (18) and the nozzle (7) are coupled together. The semi tubular body (18) is formed by a bottom part (1b) and an upper part (1a), and wherein the channel (5) is defined internally in the bottom part (1b) and the upper part (1a) closes the channel (5).

In this embodiment, the input and output ports (9, 10) for circulating cooling liquid through the channel (5), are formed in the bottom part (1b) of the body (18).

## Claims

1. A liquid-cooling device (1) for laser head nozzles, the device comprising:
a body (18) having a central opening (6) configured for accommodating a nozzle (7) of a laser head, and a channel (5) formed internally in the body (18) and extending at least in part around the central opening (6),
an input port (9) and an output port (10), both, fluidly communicated with the channel (5) for circulating a cooling liquid through the channel (5).

2. A device according to claim 1, wherein the body (18) is a tubular body, and wherein the channel (5) is a perimetral channel which extends all around the tubular body (11).

3. A device according to claim 2, wherein the central opening (6) has a cylindrical shape, and the perimetral channel (5) has an annular configuration.

4. A device according to claim 2 or 3, wherein the input port (9) and the output port (10) are diametrically arranged with respect to the perimetral channel (5).

5. A device according to any of the preceding claims, wherein the input and output ports (9, 10) are placed above the perimetral channel (5), and wherein each of the input and output port has a passage (11, 12) which extend in a direction parallel to the axis (X) of the central opening (6).

6. A device according to any of the claims 2 to 5, wherein the perimetral channel (5) has a constant inner diameter (13), while its outer diameter (14) is constant in an upper section of the same, and the outer diameter (14) progressively decreases in a lower section (16) of the perimetral channel (5).

7. A device according to any of the preceding claims, formed by an upper part (1a) and a bottom part (1b) assembled or joined together, wherein the bottom part (1b) has an inner wall (3) and an outer wall (4) such that the perimetral channel (5) is defined in between the inner and outer walls (3, 4), and wherein the upper part (1a) is configured to close the space in between the inner and outer walls (3, 4) when the upper and bottom parts (1a, 1b) are assembled or joined together.

8. A device according to any claim 7, wherein the input port (9) and the output port (10) are formed in the upper part (1a).

9. A device according to claim 1, wherein the body (18) is a semi tubular body which extends only on a part of a nozzle (7), when the body (18) and the nozzle (7) are coupled together.

10. A device according to claim 9, wherein the semi tubular body (18) is formed by a bottom part (1b) and an upper part (1a) coupled together, and wherein the channel (5) is defined internally in the bottom part (1b) and the upper part (1a) closes the channel (5).

11. A laser head nozzle assembly (15) comprising a liquid-cooling device (1) according to any of the preceding claims, and a nozzle (7) of a laser head accommodated in the central opening (6) of the body (18), such that the nozzle (7) and the liquid-cooling device (1) are thermally coupled, in order to reduce temperature of the nozzle (7) when a cooling liquid is circulated through the channel (5) of the liquid-cooling device (1).

12. A laser cladding equipment including the laser head nozzle assembly (15) defined in claim 11, and further comprising a cooling liquid circuit provided with a liquid pump and with temperature reduction means for reducing temperature of a cooling liquid inside the circuit, and wherein the cooling liquid circuit is fluidly coupled to the inner port (9) and to the outer port (10) of the liquid-cooling device, such that the temperature reduction means are located upstream the input port (9) and downstream the outport port (10).

13. A laser cladding equipment according to claim 11, further comprising a powdered material circuit for feeding powdered material to the nozzle (7), and wherein the powdered material circuit and the cooling liquid circuit are isolated from each other, such that the powdered material and the cooling liquid cannot be mixed.
